# EUROPEAN PATENT SPECIFICATION

(11) **EP 1 894 789 B1**
(45) Date of publication and mention of the grant of the patent: **05.10.2011**
(21) Application number: 06730526.8
(22) Date of filing: 29.03.2006
(51) Int. Cl.: B60R 16/02, B60J 5/06, H02G 11/00

(54) **HARNESS GUIDE OF SLIDE DOOR**
KABELBAUMFÜHRUNG FÜR SCHIEBETÜR
GUIDE DE FAISCEAU D'UNE PORTE COULISSANTE

(30) Priority: 14.06.2005 JP 2005173767
(43) Date of publication of application: 05.03.2008
(73) Proprietor: Sumitomo Wiring Systems, Ltd., Yokkaichi-shi, Mie 510-8503 (JP)
(72) Inventor: KIDA, Yuji, c/o SUMITOMO WIRING SYSTEMS, LTD., Yokkaichi-shi, Mie 510-8503 (JP)
(74) Representative: Rocke, Carsten
(86) International application number: PCT/JP2006/306578
(87) International publication number: WO 2006/134700

(56) References cited:
- EP-A- 1 378 400
- DE-A1- 19 905 022
- JP-A- 11 342 807
- JP-A- 2000 224 730
- JP-A- 2000 224 730
- JP-A- 2002 127 847
- JP-A- 2002 127 847
- JP-A- 2003 025 850
- JP-A- 2004 025 999
- JP-A- 2004 040 862
- JP-A- 2004 142 704
- JP-A- 2005 124 352
- US-A1- 2004 026 109
- US-A1- 2004 083 655
- US-A1- 2005 062 310

## Description

The present invention relates to a harness guide for use with a slide door.

As a means for guiding a wire harness used with a slide door, is a conventional one that is provided with a substantially horizontal rail, a slider slidable along the rail, and an elongated flexible guide extending from the slider, and a wire harness conductivelypositioned along the flexible guide in the form of being held therein.
The flexible guide is configured with a horizontal guide section and a curved guide section. The horizontal guide section extends from the slider along the rail and keeps a substantially horizontal shape. The curved guide section extends from an extending end of the horizontal guide section in an upwardly curved shape, and its end is secured to the slide door. The horizontal guide section and the curved guide section are arranged to be alternately elongated or shortened in accordance with the movement of the slider. One example of a harness guide for use with a slide door is Patent Document 1.
[Patent Document 1] Japanese Patent Application Publication 2003-25850 A

### Problem to Be Solved by the Invention

In such a harness guide as described above, the section of the wire harness conductively positioned by being leant along the curved guide section tends to restore a straight position, and this restoring force exerts a downward stress on the extending end of the horizontal guide section (a boundary with the curved guide section). This downward stress then gives a moment of force substantially about the slider to the horizontal guide section, and this moment of force causes an unreasonable prying force at a fitting point of the slider into the rail. As a result, it is a concern that the slider may be prevented from a smooth sliding movement.

Further, the U.S. patent application US 2004/0083655 A1 discloses a slider mounted on a rail laid on a slide door to support a door-side end of a stretching part of a cable transferred from a vehicle body toward the slide door. The cable transferred toward the slide door is introduced into a cable guide and guided between the slider and a fixing member. The cable guide is formed by coupling a plurality of pieces to undergo a bending deformation substantially in a plane. First and second contacts of two coupled pieces can contact each other for restricting the bending direction and the bending angle of the coupled pieces. A plurality of kinds of pieces is provided with differently shape contacts. This document is regarded as the closest prior art and discloses the same features as the preamble of claim 1.

The European patent application EP 1 378 400 A1 discloses cable guide formed by a plurality of link members. One end portion of the cable guide is supported to a vehicle main body by a first support member, and another end portion thereof is supported to a slide door by a second support member. The first support member supports one end portion of the cable guide in a state capable of swinging in a vertical direction approximately perpendicular to a sliding direction of the slide door. A first section of the cable guide includes a section A in which a plurality of link members are connected so as to be freely bent only in one direction from a linear state, and a section B in which a plurality of link members are connected so as to be freely bent in both directions from the linear state. A second section of the cable guide is formed such as to be capable of being bent only in one direction from the approximately linear state.

The present invention was achieved in accordance with the circumstances as described above, and its object is to enable a smooth sliding movement of a slider.

The present invention is provided with a substantially horizontal rail fixedly provided on a slide door, a slider being slidable along the rail between a first position and a second position, an elongated flexible guide formed of a plurality of link members that are linked linearly by shafts so as to be capable of relatively swinging. The flexible guide extends from the slider, and a wire harness is conductively positioned and formed to be held along the flexible guide. The flexible guide includes a horizontal guide section and a curved guide section. The horizontal guide section extends from the slider along the rail so as to keep a substantially horizontal state. The curved guide section extends upwardly and curvedly from an extending end of the horizontal guide section, and an extending end of the curved guide section is linked to the slide door so as to be limited in movement. The curved guide section includes a substantially arcuate area as a whole. A boundary between the horizontal guide section and the curved guide section shifts in accordance with the sliding movement of the slider between the first position and the second position by alternately elongating or shortening the length of the horizontal guide section. The plurality of link members includes a plurality of mono-side swing link members and at least one dual-side swing link member. The mono-side swing link members and the at least one dual-side swing link member are capable of swinging relative to another link member linked thereto in a direction to constitute the curved guide section. The dual-side swing link member is further capable of swinging to an opposite direction that both of the mono-side swing link member and the dual-side swing link member swing to. The at least one dual-side swing link member is arranged at the boundary between the horizontal guide section and the curved guide section in the horizontal guide section when the slider is located at the first position.

In this configuration, the at least one dual-side swing link member is capable of swinging to a relatively opposite side of the swinging direction of the link members located in the curved guide section, i. e. downwardly, so that an area of the horizontal guide section on the side of the dual-side swing link member where the extending end is located swings downwardly, and a vertical distance between a bottom of the horizontal guide section and an extending end of the curved guide section is expanded and a radius of curvature along the curved guide section becomes larger. With this, the restoring force of the wire harness at the section conductively positioned along the curved guide section toward a straight state is reduced.

According to the present invention, since the restoring force of the wire harness at the section conductively positioned along the curved guide section toward the straight state is reduced, the moment of force about the slider is reduced and the degree of unreasonable prying force between the slider and the rail is relieved, so that the slider slides smoothly.

Fig. 1 is a perspective view of a first embodiment;
Fig. 2 is a side view showing a state where a horizontal guide section is elongated and a dual-side swing link member swings downwardly;
Fig. 3 is a side view showing a state where the horizontal guide section is shortened and the dual-side swing link member configures a part of a curved guide section;
Fig. 4A is a partially enlarged side view with a partial cutaway showing a state where the dual-side swing link member swings to the same side as a link members located in the curved guide section swing.
Fig. 4B is a partially enlarged side view with a partial cutaway showing a state where the dual-side swing link member swings to an opposite side of the direction the link members located in the curved guide section swings to.
Fig. 4C is a partially enlarged side view with a partial cutaway showing a state where the dual-side swing link member and the mono-side swing link member, linked to the basal end side of the dual-side swing member, are held in a horizontal shape.
Fig. 5A is a partially enlarged side view with a partial cutaway showing a state where one of the mono-side swing link members swings to the same side as the link members located at the curved guide section swing.
Fig. 5B is a partially enlarged side view with a partial cutaway showing a state where one of the mono-side swing link members and the link member, linked to the basal end side of the one of the mono-side swing link members, are held in a horizontal shape.
Fig. 6 is a side view of a harness guide having no dual-side swing link member.

- H ...: a wire harness
- HG ...: a harness guide
- 10 ...: a bracket
- 11 ...: a rail
- 12 ...: a slider
- 14 ...: a flexible guide
- 14a ...: a horizontal guide section
- 14b ...: a curved guide section
- 15A ...: a mono-side swing link member
- 15B ...: a dual-side swing link member

### <First embodiment>

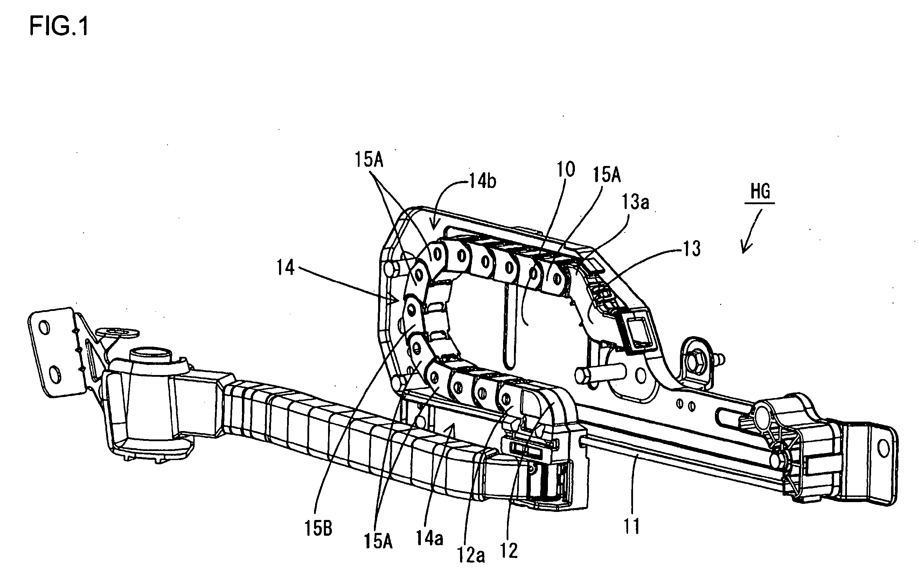

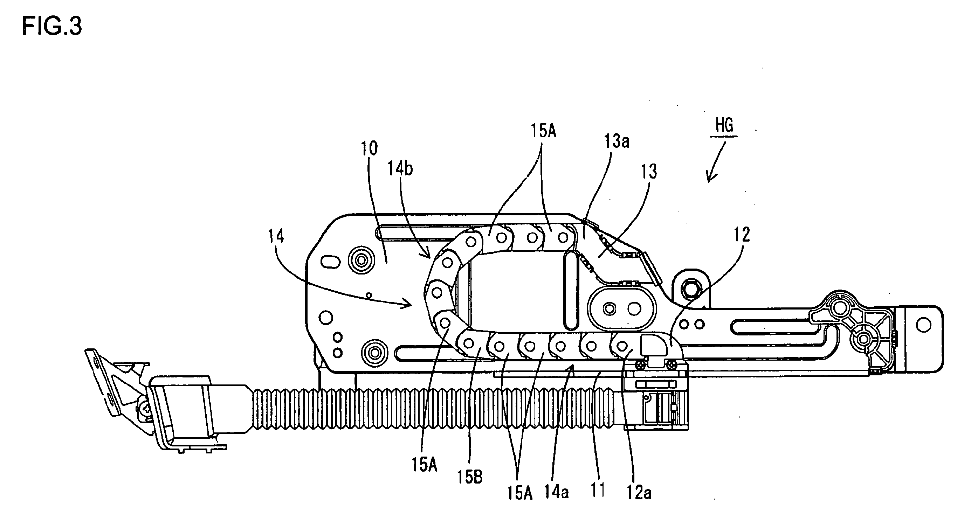

Hereinafter, a first embodiment according to the present invention will be described with reference to Figs. 1 through 6.
A harness guide HG of a slide door (not illustrated) according to the present embodiment guides a wire harness H that bundles wires for supplying electricity from a vehicle body side to the slide door side and wires for communicating a signal between the vehicle side and the slide door side such that the wire harness H is conductively positioned in a predetermined path on the slide door side.
The harness guide HG is in the form of being provided with a bracket 10 to be fixed to the slide door, a rail 11 as described below, a slider 12, and a flexible guide 14, and the like.
The bracket 10 is formed in a plate shape as a whole, with having a lower edge and an upper edge. The lower edge is arranged to be substantially horizontal and straight, while the upper edge has a substantially horizontal right half, a left half that is horizontal and higher than the right half, and a substantially lateral center that is inclined downwardly toward the right half. The bracket 10 has an inner side face on the vehicle side thereof, and the rail 11 extending horizontally and straight is provided along the lower edge of the inner side face of the bracket 10. Mounted slidably in the lateral direction (the horizontal direction) on the rail 11 is the slider 12 that is structured to be hollow so as to allow for insertion of a wire harness H. The slider 12 has an aperture for allowing the hollow part to be open toward the left side slightly above the rail 11 and an aperture for allowing the hollow part to be open downwardly. Furthermore, a holding member 13 having openings at both substantially lateral ends is fixedly provided along the inclined portion of the upper edge of the inner side face of the bracket 10.
Between the slider 12 and the holding member 13 as described above, the flexible guide 14 is provided so as to be slidable on the inner side face of the bracket 10. The flexible guide 14 is in a form such that plurality of link members 15A, 15B are linearly linked with shaft supporting structures such that the link members 15A, 15B each may relatively swing each other. A basal end of the flexible guide 14 is formed to be linked to the slider 12, while a distal end of the flexible guide 14 is linked to the holding member 13.

The flexible guide 14 is configured to included a plurality of (eleven in the present embodiment, however, it may be no more than ten, or may be twelve or more) mono-side swing link members 15A and one (a single in the present embodiment, however, it may be two or more) dual-side swing link member 15B.

Each of the mono-side swing link members 15A is configured to include a pair of walls 16 positioned in face-to-face and parallel, with the inner side face of the bracket 10, two plate-shaped stoppers 17a, 17b each bridging the substantially lateral centers of the respective side edge portions of the pair of walls 16, and a support shaft 18 horizontally provided between the pair of walls 16 at one of the two end portions thereof. The inside of the mono-side swing link member 15A defines an apertured cavity 21 of a tubular shape enclosed with the walls 16 and the stoppers 17a, 17b. The apertured cavity 21 is penetrated by a wire harness H in a lateral direction of the mono-side swing link member 15A.

The dual-side swing link member 15B, similar to the mono-side swing link members 15A, is configured to include a pair of walls 16 positioned in face-to-face and parallel, with the inner side face of the bracket 10, two plate-shaped stoppers 17a, 17b bridging the substantially lateral centers of the respective side edge portions of the pair of walls 16, and a support shaft 18 provided between the pair of walls 16 at one of the two end portions thereof. The inside of the dual-side swing link member 15B defines an apertured cavity 21 of a tubular shape enclosed with the walls 16 and the stoppers 17a, 17b. The cavity 21 is penetrated by a wire harness H in a lateral direction of the dual-side swing link member 15B.
These link members 15A, 15B are linked to each other by support shafts 18, each at the respective end portions of the pairs of walls 16 such that the respective end portions of the pair of walls 16 may relatively swing. That is, two adjacent link members 15A or 15B are formed to be linked such that a distal end portion of the link member 15A or 15B located on the basal end side (the slider 12 side) and a basal end portion of the link member 15A or 15B located on the distal end side (the holding member 13 side) may relatively pivot about the support shaft 18.
The basal end portion of each pair of walls 16 form a mating portion 19A, 19B, which is tapered off toward the end thereof at both sides. In comparison with the mating portion 19A of the mono-side swing link member 15A, the mating portion 19B of the dual-side swing link member 15B is configured to be more strongly tapered. In a state where the link members 15A, 15B are linked, the link member 15A or 15B on the distal end side out of two adjacent ones of the link members 15A, 15B is disposed in a manner that its mating portion 19A or 19B is located between the stoppers 17a and 17b of the link member 15A or 15B on the basal end side. A first abutment edge 20a, which is the upper one of the two side edges of each link member 15A or 15B when the link member 15A or 15B is horizontally directed, corresponds (is opposed) to a lower surface of a first stopper 17a, which is the upper one when the adjacent link member 15A or 15B is horizontally directed. A second abutment edge 20b, which is the lower one of the two side edges of each link member 15A or 15B when the link member 15A or 15B is horizontally directed, corresponds (is opposed) to an upper surface of a second stopper 17b, which is the lower one when the adjacent link member 15A or 15B is horizontally directed.

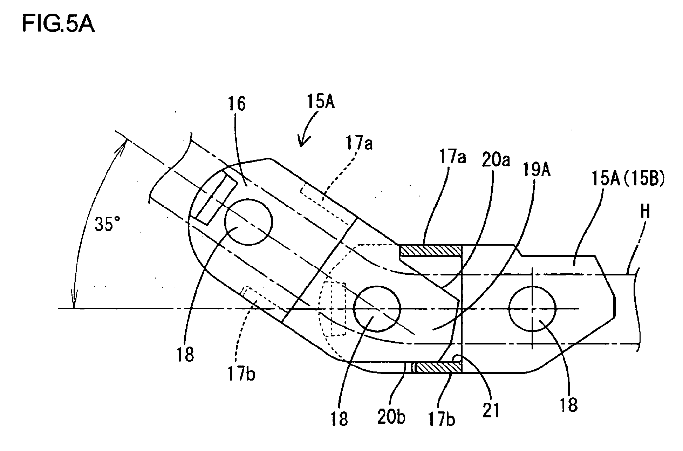

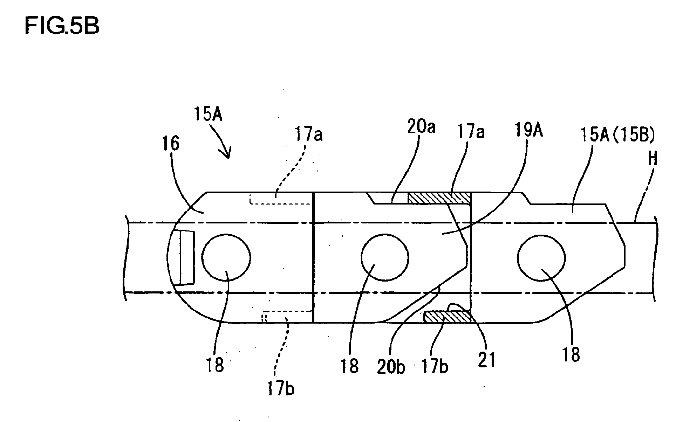

In the state where any one of the mono-side swing link members 15A and the other link member 15A or 15B linked to the basal end side of the one of the mono-side swing link members 15A are horizontally directed, as shown in Fig. 5B, the first abutment edge 20a of the mono-side swing link member 15A on the distal end side abuts against the lower surface of the first stopper 17a under the force of the weight of the mono-side swing link member 15A on the distal end side. The mono-side swing link member 15A on the distal end side thus, without swinging downwardly, keeps the same horizontal state as the link member 15A or 15B on the basal end side does. In addition, in this state, since there is a vertical clearance between the second abutment edge 20b and the second stopper 17b, the mono-side swing link member 15A on the distal end side, as shown in Fig. 5A, may swing upwardly relative to the link member 15A or 15B on the basal end side. The angle at which the mono-side swing link member 15A is inclined in this state from the horizontal state is 35 degrees in this embodiment, however, it may be more than or less than 35 degrees.

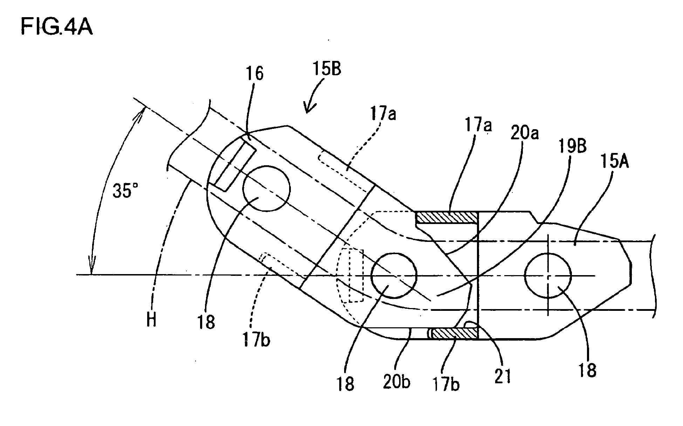

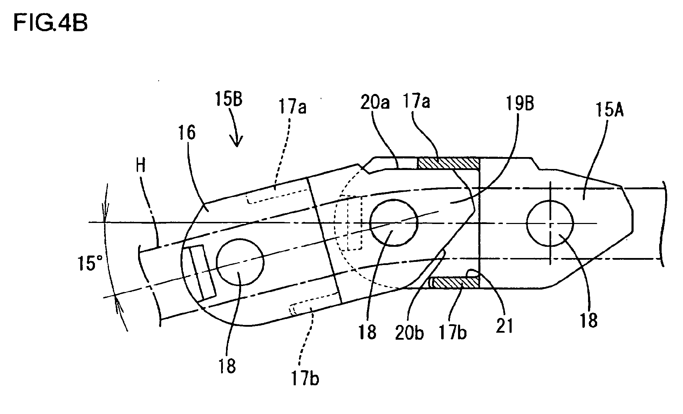

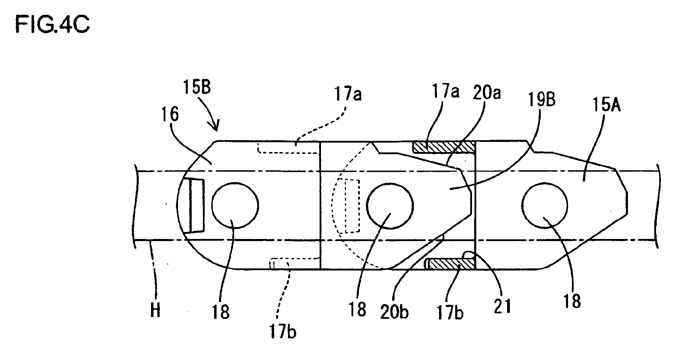

On the other hand, in the state where the dual-side swing link member 15B and the mono-side swing link member 15A linked to the basal end side of the dual-side swing link member 15B are horizontally directed, as shown in Fig. 4C, there are clearances between the first abutment edge 20a and the first stopper 17a as well as between the second abutment edge 20b and the second stopper 17b. Therefore, when the dual-side swing link member 15B is released from an underlying support, as shown in Fig. 4B, the dual-side swing link member 15B swings downwardly under the force of its own weight so as to be inclined relative to the horizontal mono-side swing link member 15A, and is held in a downwardly inclined state by the first abutment edge 20a of the dual-side swing link member 15B abutting against the lower surface of the first stopper 17a. The angle at which the dual-side swing link member 15B is inclined in this state from the horizontal state is 15 degrees in this embodiment, however, it may be more than or less than 15 degrees. In addiction, since there is a vertical clearance between the second abutment edge 20b and the second stopper 17b in this state, the dual-side swing link member 15B, as shown in Fig. 4A, may swing upwardly to be inclined relative to the mono-side swing link member 15A. The angle at which the dual-side swing link member 15B is inclined in this state from the horizontal state is 35 degrees similar to the case of the mono-side swing link member 15A in this embodiment, however, it may be more than or less than 35 degrees.

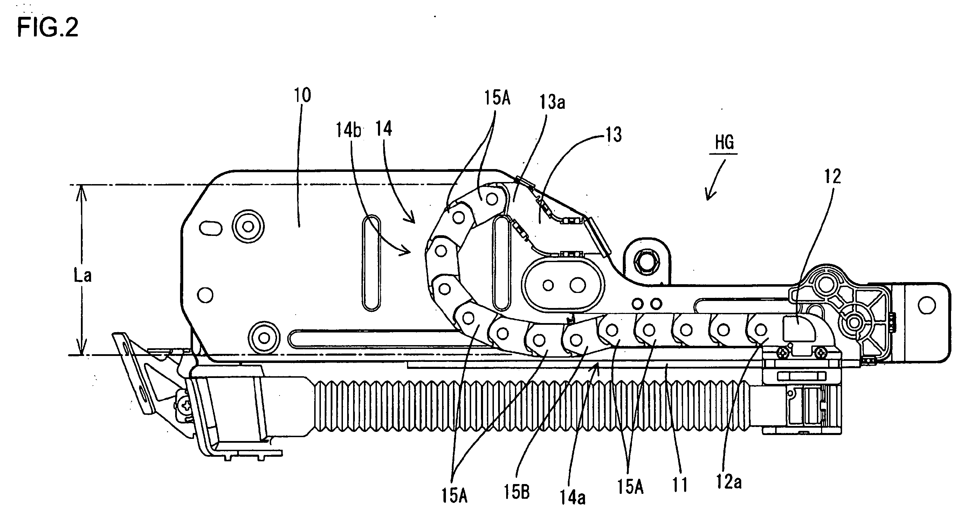

Linked in series to the slider 12 are four mono-side swing link members 15A, linked to the distal end of this four serial mono-side swing link members 15A is a dual-side swing link member 15B, and linked in series to the distal end of this dual-side swing link member 15B are seven mono-side swing link members 15A. That is, the flexible guide 14 configured by twelve link members 15A, 15B is in the form so that the dual-side swing link member 15B is disposed at the fifth position counting from the basal end side (the slider 12 side). The section on the slider 12 side (the basal end side) of the flexible guide 14 is a horizontal guide section 14a configured to have a shape extending in a substantially horizontal manner from the slider 12 along the rail 11. The basal end portion of the mono-side swing link member 15A positioned at the basal end position of the horizontal guide section is linked to a basal end side link part 12a provided on the slider 12 and having stoppers 17a, 17b and a support shaft 18 similar to those of the link members 15A, 15B. On the other hand, the section on the holding member 13 side (the distal end side) of the flexible guide 14 is a curved guide section 14b formed to be curvedly extending upwardly from the extending end of the horizontal guide section 14a. The distal end portion of the mono-side swing link member 15A positioned on the distal end position of the curved guide section 14b is linked to a distal end side link part 13a provided on the holding member 13 and having stoppers 17a, 17b and a support shaft 18 similar to those of the mono-side swing link member 15A.
Out of the link members 15A, 15B configuring the horizontal guide section 14a, each of four mono-side swing link members 15A counting from the slider 12 side keeps the horizontal state, which is parallel with the rail 11, by abutting the first abutment edge 20a against the first stopper 17a under its own weight. On the other hand, each of the mono-side swing members 15A making up the curved guide section 14b swings relative to the adjacent mono-side swing member 15A in a range limited by the abutment of the second abutment edge 20b against the second stopper 17b, and these mono-side swing members 15A form a substantial half circle shape as a whole. Furthermore, the lengths of the horizontal guide section and the curved guide section are arranged to be alternately elongated or shortened in accordance with the movement of the slider 12 along the rail 11. In other words, the boundary between the horizontal guide section and the curved guide section shifts in accordance with the movement of the slider 12. In addition, in accordance with the movement of the slider 12, the shape of the curved guide section 14b is also varied.
Effects of the present embodiment will be now explained.
A wire harness H is conductively positioned in the flexible guide 14 in the form of being held along the horizontal guide section 14a and the curved guide section 14b so as to penetrate each of the cavities 21 of the linearly linked link members 15A, 15B. The section of the wire harness H conductively positioned by being leant along the curved guide section 14b then tends to restore a straight position, and this restoring force exerts a downward stress on the extending end of the horizontal guide section 14a (the boundary with the curved guide section 14b). This downward stress then gives a moment of force substantially about the slider 12 to the horizontal guide section 14a toward the anti-clockwise direction in Figs. 2,3, and 6, and this moment of force causes an unreasonable prying force at a fitting point of the slider 12 against the rail 11. As a result, there is a concern that the slider 12 may be prevented from a smooth sliding movement. Since the restoring force of the wire harness is applied to the extending end of the horizontal guide section 14a, the longer the horizontal guide section is, the larger the moment of force is.

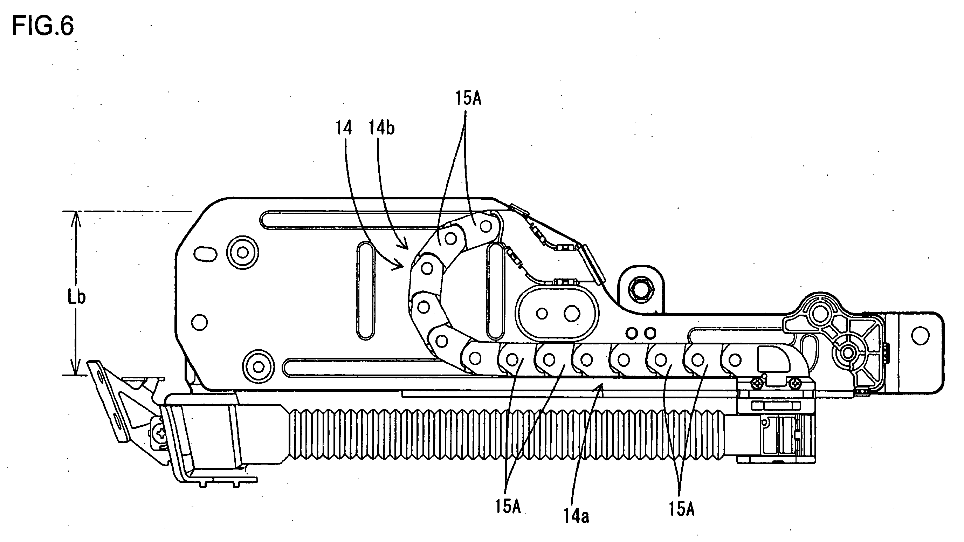

As countermeasures against this concern, applied in this embodiment is a dual-side swing link member 15B that may relatively swing toward the opposite side of the swinging direction of the link members 15A, 15B located in the curved guide section 14b (the swinging direction toward the axial inside of the curved guide section 14b), i.e. to the downward direction relative to the horizontal guide section 14a.
In the case where the flexible guide 14 is configured with only mono-side swing link members 15A without having any dual-side swing link member 15B, as shown in Fig. 6, the vertical position of the whole horizontal guide section 14a is kept stable. In the present embodiment, to the contrary, the dual-side swing link member 15B is applied and therefore, as shown in Fig. 2, the mono-side swing link members 15A, linked on the extending end side of the dual-side swing link member 15B in the horizontal guide section 14a, swings downwardly into the inclined state. Accordingly, in comparison with the flexible guide 14 as shown in Fig. 6, a vertical distance La (the distance in the direction substantially perpendicular to the rail 11) between a bottom of the horizontal guide section 14a (the distal end of the horizontal guide section 14a, and the boundary with the curved guide section 14b) and the extending end of the curved guide section 14b (the portion linking with the holding member 13) becomes larger than the distance Lb in the flexible guide shown in Fig. 6, and the radius of curvature of the curved guide section 14b also becomes larger than the counterpart shown in Fig. 6. The restoring force of the wire harness H toward the straight state at the section conductively positioned along the curved guide section 14b is thus reduced, and as a result, the moment of force about the slider 12 applied to the horizontal guide section 14a is also reduced. Therefore, in the present embodiment, the degree of unreasonable prying force between the slider 12 and the rail 11 is relieved in comparison with the counterpart shown in Fig. 6, so that the slider slides smoothly.
In addition, in the state as shown in Fig. 2, the first abutment edge 20a of the dual-side swing link member 15B abuts against the first stopper 17a, and the vertical position of the bottom portion on the distal end of the dual-side swing link member 15B in the horizontal guide section 14a (i.e. the vertical position of the lower surface of the mono-side swing link member 15A located at the distal end of the horizontal guide section 14a) is slightly higher than the lower edge (the rail 11) of the bracket 10. The flexible guide 14 therefore does not protrude downwardly from the bracket 10.
Furthermore, out of the swing angles to the two directions of the dual-side swing link member 15B, the maximum swing angle (15 degrees) to the opposite direction of the swinging direction of the link members 15A or 15B making up the curved guide section 14b, is set to be less than the maximum swing angle (35 degrees) to the same direction as the link member 15A or 15B making up the curved guide section 14b swings. This realizes a configuration of smaller radius of curvature along the curved guide section 14b as well as less vertical distance La from the bottom of the horizontal guide section 14a to the extending end of the curved guide section 14b so that the flexible guide 14 is vertically enclosed within the height of the bracket 10.
Meanwhile, in the state where the horizontal guide section 14a is shortened, the dual-side swing link member 15B configures a part of the curved guide section 14b without swinging downwardly, while the horizontal guide section 14a is configured by only the mono-side swing link members 15A.

### <Other embodiments>

The present invention is not limited to the embodiments explained in the above description made with reference to drawings, but the following embodiments may be included in the technical scope of the present invention, for example.
(1) In the above embodiment, the rail is provided on the bracket. However, according to the present invention, the rail may be provided directly on the slide door.
(2) In the above embodiment, the extending end of the curved guide section is linked to the bracket. However, according to the present invention, the extending end of the curved guide section may be linked directly to the slide door.
(3) In the above embodiment, the vertical position of the bottom portion of the horizontal guide section is arranged to be higher than the vertical position of the lower edge of the bracket. However, according to the present invention, the vertical position of the bottom of the horizontal guide section may be the same as the vertical position of the lower edge of the bracket, or may be lower than the lower edge of the bracket.
(4) In the above embodiment, only a single dual-side swing link member is provided. However, according to the present invention, the number of the dual-side swing link members may be plural.
(5) In the above embodiment, the dual-side swing link member is disposed a distance from the slider. However, according to the present invention, the dual-side swing link member may be disposed near by or adjacent to the slider.

## Claims

1. A harness guide (HG) for use with a slide door comprising:
a substantially horizontal rail (11) fixedly provided on the slide door;
a slider (12) being slidable along the rail (11) between a first position and a second position;
an elongated flexible guide (14) formed of a plurality of link members (15A, 15B) that are linked linearly by shafts (18) so as to be capable of relatively swinging, the flexible guide (14) extending from the slider (12); and
a wire harness (H) conductively positioned and formed to be held along the flexible guide (14),
wherein the flexible guide (14) includes a horizontal guide section and a curved guide section, the horizontal guide section extending from the slider (12) along the rail (11) so as to keep a substantially horizontal state, the curved guide section extending upwardly and curvedly from an extending end of the horizontal guide section, an extending end of the curved guide section being linked to the slide door so as to be limited in movement, the curved guide section including a substantially arcuate area as a whole, and
wherein a boundary between the horizontal guide section and the curved guide section shifts in accordance with the sliding movement of the slider (12) between the first position and the second position by alternately elongating or shortening the length of the horizontal guide section,
**characterized in that**
the plurality of link members includes a plurality of mono-side swing link members (15A) and at least one dual-side swing link member (15B), wherein the mono-side swing link members (15A) and the at least one dual-side swing link member (15B) are capable of swinging relative to another link member linked thereto in a direction to constitute the curved guide section, wherein the dual-side swing link member (15B) is further capable of swinging to an opposite direction that both of the mono-side swing link member (15A) and the dual-side swing link member (15B) swing to, and
wherein the at least one dual-side swing link member (15B) is arranged at the boundary between the horizontal guide section and the curved guide section in the horizontal guide section when the slider (12) is located at the first position.

2. The harness guide (HG) for use with the slide door according to claim 1, being **characterized in that** the rail (11) is provided along the lower edge of a side face of a bracket (10) having a substantially plate shape and being fixed to the slide door, while the extending end of the curved guide section is linked to the side face of the bracket (10),
wherein a maximum swing angle of the dual-side swing link member (15B) is limited such that a vertical position of a bottom portion of the distal end of the dual-side swing link member is the same as or higher than the lower edge of the bracket (10).

3. The harness guide (HG) for use with the slide door according to claim 2, being **characterized in that**, out of the swing angles of the two directions of the dual-side swing link member (15B), the maximum swing angle to the direction the mono-side swing link members (15A) configuring the curved guide section swing to is larger than the maximum swing angle to the opposite direction the mono-side swing link members (15A) configuring the curved guide swing to.

## Patentansprüche

1. Kabelbaumführung (HG) zur Verwendung mit einer Schiebetür, die Folgendes umfasst:
eine im Wesentlichen horizontale Schiene (11), die auf befestigte Weise an der Schiebetür bereitgestellt wird;
einen Gleiter (12) der entlang der Schiene zwischen einer ersten Position und einer zweiten Position gleitend verschiebbar ist;
eine längliche flexible Führung (14), die aus eine Vielzahl an Verbindungsteilen (15A, 15B) gebildet ist, die linear durch Wellen (18) derart verbunden sind, dass sie relativ schwenkbar sind, wobei die flexible Führung (14) sich ausgehend vom Gleiter (12) erstreckt; und
einen Kabelbaum (H) der derart leitend angeordnet und gebildet ist, dass er entlang der flexiblen Führung (14) gehalten wird,
wobei die flexible Führung (14) einen horizontalen Führungsabschnitt und einen kurvenförmigen Führungsabschnitt beinhaltet, wobei sich der horizontale Führungsabschnitt vom Gleiter (12) entlang der Schiene (11) derart erstreckt, dass er eine im Wesentlichen horizontale Lage beibehält und wobei sich der kurvenförmige Führungsabschnitt nach oben hin und kurvenförmig ausgehend von einem Verlaufsende des horizontalen Führungsabschnitt erstreckt, wobei ein Verlaufsende des kurvenförmigen Führungsabschnitts mit der Schiebetür derart verbunden ist, dass es in seiner Bewegung eingeschränkt ist, wobei der kurvenförmige Führungsabschnitt einen im Wesentlichen bogenförmigen Bereich als Ganzes beinhaltet, und
wobei sich eine Grenze zwischen dem horizontalen Führungsabschnitt und dem kurvenförmigen Führungsabschnitt, entsprechend der Gleitbewegung des Gleiters (12), zwischen der ersten Position und der zweiten Position, abwechselnd durch Verlängerung oder Verkürzung des horizontalen Führungsabschnitts verschiebt,
**dadurch gekennzeichnet, dass**
die Vielzahl an Verbindungsteilen eine Vielzahl an einseitigen Schwenkverbindungsteilen (15A) und mindestens ein zweiseitiges Schwenkverbindungsteil (15B) beinhaltet, wobei die einseitigen Schwenkverbindungsteile (15A) und das mindestens eine zweiseitige Schwenkverbindungsteil (15B) dazu in der Lage sind bezüglich eines damit verbundenen anderen Verbindungsteil in einer Richtung zu schwenken, um den kurvenförmigen Führungsabschnitt zu bilden, wobei das zweiseitige Schwenkverbindungsteil (15B) des Weiteren in der Lage ist, in eine Richtung zu schwenken, die zu der Richtung, in die beide, die einseitigen Schwenkverbindungsteile (15A) und das zweiseitige Schwenkverbindungsteil (15B) schwenken, entgegengesetzt ist, und
wobei das mindestens eine zweiseitige Schwenkverbindungsteil (15B) an der Grenze zwischen dem horizontalen Führungsabschnitt und dem kurvenförmigen Führungsabschnitt, im horizontalen Führungsabschnitt angeordnet ist, wenn sich der Gleiter (12) in der ersten Position befindet.

2. Kabelbaumführung (HG) zur Verwendung mit einer Schiebetür gemäß Anspruch 1, **dadurch gekennzeichnet, dass** die Schiene (11) entlang der unteren Kante einer Seitenfläche eines Trägers (10) bereitgestellt wird, der eine im Wesentlichen flache Form aufweist und der an der Schiebetür befestigt ist, während das Verlaufsende des kurvenförmigen Führungsabschnitts mit der Seitenfläche des Trägers (10) verbunden ist,
wobei ein maximaler Schwenkwinkel des zweiseitigen Schwenkverbindungsteils (15B) derart begrenzt ist, dass eine vertikale Position eines unteren Abschnitts des distalen Endes des zweiseitigen Schwenkverbindungsteils gleich hoch oder höher als die untere Kante des Trägers (10).

3. Kabelbaumführung (HG) zur Verwendung mit einer Schiebetür gemäß Anspruch 2, **dadurch gekennzeichnet, dass** außerhalb der Schwenkwinkel der zwei Richtungen des zweiseitigen Schwenkverbindungsteils (15B), der maximale Schwenkwinkel in die Richtung, in die die einseitigen Schwenkverbindungsteile (15A), die den kurvenförmigen Führungsabschnitt ausbilden, schwenken, größer ist als der maximale Schwenkwinkel in eine Richtung, die der Richtung, in die die einseitigen Schwenkverbindungsteile (15A), die den kurvenförmigen Führungsabschnitt ausbilden, schwenken, entgegengesetzt ist.

## Revendications

1. Guide de faisceau (HG) pour une utilisation avec une porte coulissante, comprenant :
un rail (11) essentiellement horizontal, prévu de manière fixe auprès d'une porte coulissante ;
un coulisseau (12), coulissant le long du rail (11) entre une première position et une deuxième position ;
un moyen de guidage (14) flexible et de forme allongée, formé d'une pluralité de pièces de raccordement (15A, 15B), qui sont raccordés de manière linéaire par des tiges (18) de manière à pouvoir réciproquement pivoter, le moyen de guidage (14) flexible s'étendant à partir du coulisseau (12) ; et
un faisceau de câbles (H) positionné à conduction et formé de manière à être maintenu le long du moyen de guidage (14) flexible,
sachant que le moyen de guidage (14) flexible comprend une section de guidage horizontale et une section de guidage courbée, la section de guidage horizontale s'étendant à partir du coulisseau (12) le long du rail (11) de manière à garder un état essentiellement horizontal, la section de guidage courbée s'étendant vers le haut et de façon courbée à partir d'une extrémité d'extension de la section de guidage horizontale, une extrémité d'extension de la section de guidage courbée étant raccordée à la porte coulissante de manière à être limité dans le mouvement, la section de guidage courbée comprenant une zone essentiellement arquée dans son ensemble, et
sachant qu'une frontière entre la section de guidage horizontale et la section de guidage courbée se déplace conformément à un mouvement coulissant du coulisseau (12) entre la première position et la deuxième position en allongeant ou raccourcissant alternativement la longueur de la section de guidage horizontale,
**caractérisé en ce que**
la pluralité de pièces de raccordement comprend une pluralité de pièces de raccordement pivotant mono-latérales (15A) et au moins une pièce de raccordement pivotant bilatérale (15B), sachant que les pièces de raccordement pivotant mono-latérales (15A) et la ou les pièces de raccordement pivotant bilatérales (15B) sont capables de pivoter par rapport à une autre pièce de raccordement raccordée à celles-ci dans une direction pour constituer la section de guidage courbée, sachant que la pièce de raccordement pivotant bilatérale (15B) est en outre capable de pivoter dans une direction opposée à celle dans laquelle pivotent les deux pièces, la pièce de raccordement pivotant mono-latérale (15A) et la pièce de raccordement pivotant bilatérale (15B), et
sachant que la ou les pièces de raccordement pivotant bilatérales (15B) est disposée à la frontière entre la section de guidage horizontale et la section de guidage courbée dans la section de guidage horizontale quand le coulisseau (12) est situé dans la première position.

2. Le guide de faisceau (HG) pour une utilisation avec la porte coulissante d'après la revendication 1, **caractérisé en ce que** le rail (11) est prévu le long du bord inférieur d'une face latérale d'un support (10) présentant une forme essentiellement plate et étant fixé à la porte coulissante, tandis que l'extrémité d'extension de la section de guidage courbée est raccordée à la face latérale du support (10),
sachant qu'un angle maximal de pivotement de la pièce de raccordement pivotant bilatérale (15B) est limité de manière qu'une position verticale d'une portion inférieure de l'extrémité distale de la pièce de raccordement pivotant bilatérale est égale ou supérieure au bord inférieur du support (10).

3. Le guide de faisceau (HG) pour une utilisation avec la porte coulissante d'après la revendication 2, **caractérisé en ce qu'**en dehors des angles de pivotement des deux directions de la pièce de raccordement pivotant bilatérale (15B), l'angle maximal de pivotement dans la direction dans laquelle les pièces de raccordement pivotant mono-latérales (15A) configurant le moyen de guidage courbé, pivotent est supérieur à l'angle maximal de pivotement dans la direction opposée à celle dans laquelle les pièces de raccordement pivotant mono-latérales (15A) configurant le moyen de guidage courbé, pivotent.
